# EUROPEAN PATENT APPLICATION

(11) **EP 2 837 496 A1**
(43) Date of publication of application: **18.02.2015**
(21) Application number: 13775241.6
(22) Date of filing: 09.04.2013
(51) Int. Cl.: B32B 27/32, B32B 5/32, C08J 9/28, H01M 2/16

(54) **MULTI-LAYERED POROUS FILM, ELECTRICAL CELL SEPARATOR, AND ELECTRICAL CELL**

(30) Priority: 13.04.2012 JP 2012092315
(71) Applicant: Toray Battery Separator Film Co., Ltd., Tochigi 329-2763 (JP)
(72) Inventor: SHIMIZU, Ken, Nasushiobara-shi Tochigi 329-2763 (JP); MIZUNO, Naoki, Nasushiobara-shi Tochigi 329-2763 (JP); IRIE, Michihiko, Nasushiobara-shi Tochigi 329-2763 (JP)
(74) Representative: Webster, Jeremy Mark
(86) International application number: PCT/JP2013/060692
(87) International publication number: WO 2013/154090

(57) **Abstract**

A laminated porous membrane comprising a polyolefin porous membrane A, and a porous layer B provided on at least one surface of the polyolefin porous membrane A, the porous layer B containing a filler (a) and a binder resin (b) as essential components, the filler (a) having a true specific gravity of less than 2.0 g/cm³.

Provided is a laminated porous membrane having a low heat shrinkage rate and an excellent meltdown-resistant property without compromising properties such as insulation property, ion permeability, light weight, and slip characteristics which are essentially required for separators. Also provided is a battery or a capacitor including the laminated porous membrane as a separator, which is highly safe and has a high weight energy density.

## Description

### TECHNICAL FIELD

The present invention relates to a laminated porous membrane having a low heat shrinkage rate and an excellent meltdown-resistant property without compromising properties such as insulation property, ion permeability, light weight, and slip characteristics which are essentially required for separators. The present invention also relates to a battery or a capacitor including the laminated porous membrane as a separator, which is highly safe and has a high weight energy density.

### BACKGROUND ART

Thermoplastic resin microporous membranes are widely used, for example, as membranes for separating substances, permselective membranes, and partition materials. For example, they are used in various applications such as various filters such as reverse osmosis filtration membranes, ultrafiltration membranes, and microfiltration membranes; moisture-permeable waterproof clothing; battery separators used in lithium ion batteries, nickel-hydrogen batteries, and the like; and separation membranes for electrolytic capacitors. In particular, polyolefin microporous membranes are used as lithium ion battery separators, and the performance of polyolefin microporous membranes is highly responsible for battery properties, battery productivity, and battery safety. Thus, excellent ion permeability, excellent mechanical properties, low heat-shrinking property, and the like are required.

Lithium ion batteries, for their properties that enable high capacity and high energy density, are expected to be increasingly used in consumer applications (e.g., personal digital assistances, power tools), transportation applications (e.g., automobiles, buses), and electricity storage applications (e.g., smart grids) in the future. Most of such batteries have a structure in which a separator made of an electrically insulating porous film is interposed between positive and negative electrodes; an electrolyte solution in which a lithium salt is dissolved is impregnated into pores of the film; and the positive and negative electrodes and the separator are laminated or spirally wound. For the lithium ion batteries, there is a need to take various safety measures against problems due to their high capacity and high energy density (e.g., significant increase of battery temperature due to a short circuit inside or outside a battery), and it has been attempted to devise the separator in various ways.

For example, the production of a polyolefin microporous membrane generally involves a stretching step, and the polyolefin microporous membrane has the property of causing heat shrinkage when heated to near its melting point. Thus, there is a concern that a short circuit inside or outside a battery increases the battery temperature, and a separator made of the polyolefin microporous membrane also causes similar heat shrinkage when heated in the battery, resulting in that insulation between electrodes by the separator cannot be ensured. For such a concern, the separator is required to reduce heat shrinkage.

In cases where the battery temperature increases even higher to exceed the melting point of the polyolefin, there is a concern that the separator softens, melts, and ruptures, whereby insulation between electrodes cannot be ensured, leading to firing in the worst case. For such a concern, the separator is required to improve its meltdown-resistant property.

For the above-described demands for the separator about the low heat-shrinking property and meltdown-resistant property, improvement of production conditions of the separator and formation of an inorganic particle layer or a heat resistant resin layer on the separator surface have been proposed.

### PRIOR ART DOCUMENTS

### PATENT DOCUMENTS

For example, there have been proposed a method of producing a polyolefin microporous membrane provided with both a reduced heat shrinkage rate and other physical properties by introducing a shrinkage step into the process for producing a polyolefin microporous membrane (Patent Document 1), a multilayer porous membrane comprising a polyolefin resin porous membrane and a porous layer containing an inorganic filler or a resin having a melting point and/or glass transition temperature of 180°C or higher (Patent Document 2), a composite porous membrane obtained by integrating a porous membrane A1 comprising a resin having a melting point of 150°C or lower with a porous membrane B1 comprising a resin having a glass transition temperature of higher than 150°C (Patent Document 3), and the like.

One factor of impairment of the insulation property between electrodes is metal foreign substances mixed in during battery production. In the case where a separator contains inorganic filler, there is a concern that metal foreign substances are caused by wearing a slitter blade in slitting of the separator and the metal foreign substances are mixed into a battery. For such a concern, a porous film obtained by laminating a heat-resistant layer comprising a filler having a Mohs hardness of 6 or less and a resin binder has been proposed (Patent Document 4).
Patent Document 1: JP 2001-172420 A
Patent Document 2: JP 2007-273443 A
Patent Document 3: JP 2007-125821 A
Patent Document 4: JP 2011-110704 A

### SUMMARY OF THE INVENTION

### PROBLEMS TO BE SOLVED BY THE INVENTION

However, although reduction of heat shrinkage is achieved by the improvement in the method of producing a polyolefin membrane reported in Patent Document 1, an even higher meltdown-resistant property is desired. Further, in Patent Document 2, although improvement of meltdown-resistant property is achieved, there is a concern about the increase in air resistance and the occurrence of metal foreign substances; further, the increase in separator weight is unavoidable since the proportion of inorganic particles is large, and it becomes difficult to achieve a high energy density which is one of the required properties of a battery. In Patent Document 3, although the increase in air resistance can be reduced by not applying a heat resistant resin solution directly to a polyolefin membrane, the coating process is complicated, which is disadvantageous in terms of cost. In Patent Document 4, although the possibility of the occurrence of metal foreign substance is reduced, the increase in air resistance due to penetration of the binder resin into pores of a polyolefin membrane is unavoidable.

Thus, the present invention aims to provide a laminated porous membrane having a low heat shrinkage rate and an excellent meltdown-resistant property without compromising properties such as insulation property, ion permeability, light weight, and slip characteristics which are essentially required for separators. The present invention also aims to provide battery which is highly safe and has a high weight energy density.

### MEANS FOR SOLVING THE PROBLEMS

To solve the problems described above, the laminated porous membrane of the present invention has the following constitution:
A laminated porous membrane comprising a polyolefin porous membrane A, and a porous layer B provided on at least one surface of the polyolefin porous membrane A,
the porous layer B containing a filler and a binder resin as essential components, the filler having a true specific gravity of less than 2.0 g/cm³.
The battery separator of the present invention has the following constitution:
   a battery separator comprising the laminated porous membrane described above.
The battery of the present invention has the following constitution:
a battery comprising a positive electrode, a negative electrode, an electrolyte, and the at least one battery separator described above.

In the laminated porous membrane of the present invention, the filler in the porous layer B preferably has an average diameter in the range of 0.1 to 3.0 µm.

In the laminated porous membrane of the present invention, the filler in the porous layer B is preferably composed of organic substance.

In the laminated porous membrane of the present invention, the filler in the porous layer B preferably comprises particles having a pore therein.

In the laminated porous membrane of the present invention, the binder resin in the porous layer B is preferably a heat resistant resin.

In the laminated porous membrane of the present invention, the binder resin in the porous layer B preferably contains a polyamide-imide resin.

In the laminated porous membrane of the present invention, the binder resin in the porous layer B is preferably a hydrophilic resin.

In the laminated porous membrane of the present invention, the polyolefin porous membrane A preferably has a thickness in the range of 3 to 25 µm.

In the laminated porous membrane of the present invention, the polyolefin porous membrane A is preferably produced by wet process.

The laminated porous membrane of the present invention preferably has a shutdown temperature in the range of 70 to 160°C.

### EFFECTS OF THE INVENTION

The present invention provides a laminated porous membrane having a low heat shrinkage rate and an excellent meltdown-resistant property without compromising properties such as insulation property, ion permeability, light weight, and slip characteristics which are essentially required for separators, and a battery separator including the same.

### BEST MODE FOR CARRYING OUT THE INVENTION

To achieve a low heat shrinkage rate and a meltdown-resistant property without compromising properties such as insulation property, ion permeability, light weight, and slip characteristics which are essentially required for separators, the laminated porous membrane in the present invention needs to be a laminated porous membrane comprising a polyolefin porous membrane A, and a porous layer B provided on at least one surface of the polyolefin porous membrane A, the porous layer B containing a filler (a) and a binder resin (b) as essential components, the filler (a) having a true specific gravity of less than 2.0 g/cm³.

The composition of the polyolefin porous membrane A of the present invention will now be described.

The polyolefin porous membrane A in the present invention is preferably a porous film in terms of the balance of electrical insulation property, ion permeability, uniformity in thickness, mechanical strength, and the like.

The material of the polyolefin porous membrane A in the present invention is preferably, for example, a polyolefin resin such as polyethylene or polypropylene from the standpoint of shutdown property. The polyolefin porous membrane A may be a single substance, a mixture of two or more different polyolefin resins, for example, a mixture of polyethylene and polypropylene, or a copolymer of different olefins, for example, ethylene and propylene. Among the polyolefin resins, polyethylene and polypropylene are particularly preferred. This is because polyethylene and polypropylene have, in addition to basic properties such as electrical insulating property and ion permeability, a shutdown property to block a current in abnormal temperature rise of a battery to suppress excessive temperature rise.

The mass average molecular weight (Mw) of the polyolefin resin is not critical, but typically in the range of 1 × 10⁴ to 1 × 10⁷, preferably in the range of 1 × 10⁴ to 5 × 10⁶, and more preferably in the range of 1 × 10⁵ to 5 × 10⁶.

The ratio of Mw to number average molecular weight (Mn), i.e., molecular weight distribution (Mw/Mn), of the polyolefin resin is not critical, but preferably in the range of 5 to 300, more preferably in the range of 10 to 100. When the lower limit of Mw/Mn is in this preferred range, the amount of high molecular weight components is appropriate, and it is easy to extrude a solution of the polyolefin. When the upper limit of Mw/Mn is in this preferred range, the amount of low molecular weight components is appropriate, and the strength of the resulting microporous membrane is maintained. Mw/Mn is used as an index of molecular weight distribution; namely, in the case of a polyolefin composed of a single substance, a larger value means a wider molecular weight distribution. The Mw/Mn of the polyolefin composed of a single substance can be adjusted as appropriate by means of multistage polymerization of the polyolefin. A preferred multistage polymerization method is two-stage polymerization in which high molecular weight components are polymerized in a first stage, and low molecular weight components are polymerized in a second stage. In the case where the polyolefin is a mixture, the difference in Mw of components to be mixed increases as the Mw/Mn increases, and the difference in Mw decreases as the Mw/Mn decreases. The Mw/Mn of the polyolefin mixture can be appropriately adjusted by adjusting the molecular weight or mixing ratio of the components.

The polyolefin resin preferably comprises polyethylene, and examples of polyethylenes include ultra high molecular weight polyethylene, high density polyethylene, medium density polyethylene, and low density polyethylene. Further, any polymerization catalyst may be used, and polyethylenes produced using a polymerization catalyst such as a Ziegler-Natta catalyst, a Phillips catalyst, or a metallocene catalyst may be used.

These polyethylenes may be not only a homopolymer of ethylene but also a copolymer containing a small amount of any other α-olefin. Examples of α-olefins other than ethylene that can be suitably used include propylene, 1-butene, 1-pentene, 1-hexene, 4-methyl-1-pentene, 1-octene, (meth) acrylic acid, esters of (meth) acrylic acid, and styrene.

The polyethylene may be a single substance, but is preferably a mixture of two or more polyethylenes. As the polyethylene mixture, a mixture of two or more ultra high molecular weight polyethylenes having different Mws, a mixture of two or more high density polyethylenes having different Mws, a mixture of two or more medium density polyethylenes having different Mws, or a mixture of two or more low density polyethylenes having different Mws may be used, or a mixture of two or more polyethylenes selected from the group consisting of ultra high molecular weight polyethylene, high density polyethylene, medium density polyethylene, and low density polyethylene may be used.

In particular, from the standpoint of retaining responsivity to temperature rise (shutdown speed) in a shutdown phenomenon and maintaining the shape of a polyolefin porous membrane in a high-temperature region at or higher than a shutdown temperature to retain the insulation property between electrodes, a preferred polyethylene mixture is a mixture of ultra high molecular weight polyethylene with a Mw of 5 × 10⁵ or more and polyethylene with a Mw of 1 × 10⁴ or more but less than 5 × 10⁵.

The Mw of ultra high molecular weight polyethylene is preferably in the range of 5 × 10⁵ to 1 × 10⁷, more preferably in the range 1 × 10⁶ to 1 × 10⁷, and particularly preferably in the range of 1 × 10⁶ to 5 × 10⁶.

As the polyethylene with a Mw of 1 × 10⁴ or more but less than 5 × 10⁵, any of high density polyethylene, medium density polyethylene, and low density polyethylene can be used, and in particular, it is preferable to use high density polyethylene. As the polyethylene with a Mw of 1 × 10⁴ or more but less than 5 × 10⁵, two or more polyethylenes having different Mws may be used, or two or more polyethylenes having different densities may be used. When the upper limit of the Mw of the polyethylene mixture is 1 × 10⁷, melt extrusion can be easily carried out.

The content of ultra high molecular weight polyethylene in the polyethylene mixture is preferably 1% by weight or more based on the total polyethylene mixture, more preferably in the range of 10 to 80% by weight.

To the above-described polyethylene composition comprising ultra high molecular weight polyethylene, at least one polyolefin selected from the group consisting of polyl-butene with a Mw in the range of 1 × 10⁴ to 4 × 10⁶, polyethylene wax with a Mw in the range of 1 × 10³ to 4 × 10⁴, and ethylene/α-olefin copolymer with a Mw in the range of 1 × 10⁴ to 4 × 10⁶ may be added as an optional component. The amount of such an optional component is preferably 20% by weight or less based on 100% by weight of the polyolefin composition.

The polyolefin resin may comprise polypropylene together with polyethylene for the purpose of improving meltdown-resistant property and high-temperature preservability of a battery. The Mw of polypropylene is preferably in the range of 1 × 10⁴ to 4 × 10⁶. Polypropylene may be a homopolymer or a block copolymer and/or random copolymer comprising any other α-olefin. Ethylene is preferred as the other α-olefin. The content of polypropylene is preferably 80% by weight or less based on 100% by weight of the total polyolefin mixture (polyethylene + polypropylene).

The polyolefin resin may comprise a polyolefin for providing a shutdown property in order to improve the properties of a battery separator. As the polyolefin for providing a shutdown property, for example, low density polyethylene can be used. Low density polyethylene is preferably at least one selected from the group consisting of branched ones, linear ones, and ethylene/α-olefin copolymers produced using a single-site catalyst. The amount of low density polyethylene is preferably 20% by weight or less based on 100% by weight of the total polyolefin. When the upper limit of the amount of low density polyethylene is in this preferred range, membrane rupture is less likely to occur during stretching.

The constitution, production method, and properties of the polyolefin porous membrane A will now be described.

The polyolefin porous membrane A in the present invention may be produced by any method, and a phase structure for the intended purpose can be provided unrestrictedly depending on the production method. Examples of the method of producing the porous membrane A include, but are not limited to, foaming process, phase separation method, dissolution and recrystallization method, stretching pore-forming process, and powder sintering process, among which the phase separation method is preferred in terms of uniformity of micropores.

Examples of the production method according to the phase separation method include a method comprising melt-blending, for example, a polyolefin resin with a membrane-forming solvent, extruding the resulting molten mixture through a die, cooling the extrudate to form a gel-like product, stretching the gel-like product obtained in at least one direction, washing off the membrane-forming solvent, and performing drying to obtain a porous membrane.

To reduce the heat shrinkage rate of the polyolefin porous membrane A, the dried porous membrane may optionally be heat set. The heat setting may be a heat setting in which width reduction is carried out with both MD and TD fixed or a heat setting in which width reduction is carried out with at least one of MD and TD fixed. The width reduction is carried out in at least one direction to a shrinkage rate in the range of 0.01 to 50%, preferably in the range of 3 to 20%. When the lower limit of the shrinkage rate is in this preferred range, the heat shrinkage rate after 8 hr at 105°C of the resulting polyolefin microporous membrane improves. When the upper limit of the shrinkage rate is in this preferred range, the air resistance is kept low. MD means a travel direction (machine direction) in a production line, and TD means a transverse direction perpendicular to MD.

The heat set temperature varies depending on the polyolefin resin used and is preferably 90 to 150°C. When it is in this preferred range, the heat shrinkage rate is sufficiently reduced, and the air resistance is kept low. The time of heat setting is not critical, but typically 1 seconds to 10 minutes, preferably 3 seconds to 2 minutes.

The polyolefin porous membrane A may be a monolayer membrane or a multilayer membrane comprising two or more layers (e.g., composed of three layers, polypropylene/polyethylene/polypropylene or polyethylene/polypropylene/polyethylene).

A multilayer membrane comprising two or more layers can be produced either by a method comprising melt-blending each of the polyolefins constituting, for example, a first layer and a second layer with a solvent for film formation, feeding the resulting molten mixtures from each extruder to one die to integrate gel sheets constituting each component, and co-extruding the integrated gel sheets, or by a method comprising laminating gel sheets constituting each layer and heat-fusing the laminate. The co-extrusion method is preferred because a high interlayer adhesive strength is easily achieved; high permeability is easily maintained because continuous pores are easily formed between layers; and productivity is high.

The polyolefin porous membrane A preferably has a shutdown property to block pores in the case of abnormal charge and discharge reaction from the standpoint of safety in use of a battery. Accordingly, the melting point (softening point) of the constituent polyolefin resin is preferably 70 to 160°C, more preferably 100 to 140°C. When the lower limit of the melting point of the polyolefin resin is in this preferred range, the shutdown function will not be activated in normal use, and therefore a battery will not be inoperable. When the upper limit of the melting point of the polyolefin resin in this preferred range, the shutdown function is activated before an abnormal reaction proceeds enough, and safety can be ensured.

The thickness of the polyolefin porous membrane A is preferably 3 µm or more but less than 25 µm. The upper limit of the thickness is more preferably 20 µm. The lower limit of the thickness is more preferably 5 µm, still more preferably 7 µm. When the lower limit of the thickness is in this preferred range, a membrane strength to maintain practical processability and a shutdown function can be provided. When the upper limit of the thickness is in this preferred range, the electrode area per unit volume in a battery case is not strictly restricted, which allows for adaptation to increase in battery capacity in the future.

The upper limit of the air resistance of the polyolefin porous membrane A, as measured by a method in accordance with JIS P 8117, is preferably 500 sec/100 cc Air, more preferably 400 sec/100 cc Air, and most preferably 300 sec/100 cc Air. The lower limit of the air resistance is preferably 50 sec/100 cc Air, more preferably 80 sec/100 cc Air.

The upper limit of the porosity of the polyolefin porous membrane A is preferably 70%, more preferably 60%, and most preferably 55%. The lower limit of porosity is preferably 25%, more preferably 30%, and most preferably 35%.

The air resistance and porosity of the polyolefin porous membrane A have a great influence on the ion permeability (charge and discharge operating voltage), the charge and discharge properties of a battery, and the lifetime (closely related to the amount of electrolytic solution retained) of a battery, and when the air resistance is in the above preferred range, functions of a battery can be fully exerted. When the lower limit of the air resistance is in the above preferred range and the upper limit of the porosity is in the above preferred range, a sufficient mechanical strength and an electrical insulation property between electrodes can be maintained, which decreases the possibility of a short circuit during charge and discharge. Also from the standpoint of reducing heat shrinkage, the air resistance and porosity are preferably in the above ranges.

The heat shrinkage rate of the polyolefin porous membrane A needs to be low from the standpoint of reducing the heat shrinkage rate of the laminated porous membrane of the present invention. The heat shrinkage rate of the polyolefin porous membrane A after 8 hr at 105°C is preferably 7% or less, more preferably 5% or less, in both MD and TD.

The average pore size of the polyolefin porous membrane A is preferably 0.03 to 1.0 µm, more preferably 0.05 to 0.5 µm, and most preferably 0.1 to 0.3 µm, because it has a great influence on the shutdown speed and the heat shrinkage rate. When the lower limit of the average pore size is in this preferred range, it is less likely that the air resistance significantly deteriorates upon lamination with the porous layer B containing the filler (a) and the binder resin (b) as essential components, and the heat shrinkage rate is kept low. When the upper limit of the average pore size is in the above preferred range, the response to temperature in a shutdown phenomenon does not slow down, or phenomena such as shift of the shutdown temperature to the higher temperature side depending on the temperature rise rate do not occur.

The method of controlling the average pore size of the polyolefin porous membrane A is not critical, and it can be controlled, for example, by the stretching ratio in the membrane-forming process, and in the phase separation method, by the concentration of a polyolefin resin in melt blending of the polyolefin resin with a membrane-forming solvent.

Next, to the porous layer B containing the filler (a) and the binder resin (b) as essential components in the present invention, it is necessary to add the filler (a). By adding the filler (a) to the porous layer B, effects can be expected such as inhibition of the reduction of the air resistance of the laminated porous membrane, reduction of curling of the laminated porous membrane, prevention of an internal short circuit due to dendrites that grow between electrodes, reduction of heat shrinkage, and impartation of slip characteristics.

The upper limit of the amount of the filler (a) in the porous layer B is preferably 95% by volume, more preferably 90% by volume. The lower limit is preferably 10% by volume, more preferably 20% by volume. When the upper limit of the amount is in this preferred range, the percentage of the binder resin (b) in the total volume of the porous layer B is not too low, and the binder resin (b) enters into pores of the polyolefin porous membrane A, which provides sufficient adhesion to the polyolefin porous membrane A and provides sufficient cohesiveness in the porous layer B, whereby defects such as falling off of the filler (a) can be prevented. When the lower limit of the amount is in this preferred range, possible various effects due to filler addition can be fully exerted.

The filler (a) in the porous layer B in the present invention needs to have a true specific gravity of less than 2.0 g/cm³ in order to reduce the weight of a separator and provide slip characteristics. If the true specific gravity of the filler (a) in the porous layer B is not less than 2.0 g/cm³, the difference in specific gravity from the binder resin (b) is large, and the filler tends to precipitate in the porous layer B, resulting in that the laminated porous membrane is provided with poor slip characteristics, which may cause a process problem in the production of a battery. When the true specific gravity is less than 2.0 g/cm³, the filler may be of any material but is preferably composed of organic substance. When the filler is composed of organic substance, a slitter blade is not easily worn in slitting of a separator, causing no metal foreign substance, and thus there is no concern about impairing the insulation property between electrodes due to mixing of a metal foreign substance into a battery.

Specific examples of the material of the filler (a) composed of organic substance in the present invention include polyamide; polyacetal; polycarbonate; (modified) polyphenylene ether; polyesters such as polyethylene terephthalate and polybutylene terephthalate; polysulfone; polyether sulfone; polyphenylene sulfide; polyarylate; polyamide-imide; polyetherimide; polyether ether ketone; polyimide; liquid crystal polymers such as polycondensate of ethylene terephthalate and *p-*hydroxybenzoic acid and polycondensate of 2,6-hydroxynaphthoic acid and *p-*hydroxybenzoic acid; fluororesins such as polytetrafluoroethylene, polyvinylidene fluoride, tetrafluoroethylene/perfluoroalkyl vinyl ether copolymer, tetrafluoroethylene/hexafluoropropylene copolymer, and tetrafluoroethylene/ethylene copolymer; thermosetting resins such as phenolic resin, urea resin, melamine resin, benzoguanamine resin, epoxy resin, and diallyl phthalate resin; silicone resin; and polymer or copolymer of (meth) acrylates and ethylenically unsaturated compounds such as styrene.

Among them, from the standpoint of heat resistance, solvent resistance, and low water absorption, polyesters such as polyethylene terephthalate and polybutylene terephthalate; polyether ether ketone; polyimide; liquid crystal polymers such as polycondensate of ethylene terephthalate and *p*-hydroxybenzoic acid and polycondensate of 2,6-hydroxynaphthoic acid and *p*-hydroxybenzoic acid; fluororesins such as polytetrafluoroethylene, polyvinylidene fluoride, tetrafluoroethylene/perfluoroalkyl vinyl ether copolymer, tetrafluoroethylene/hexafluoropropylene copolymer, and tetrafluoroethylene/ethylene copolymer; thermosetting resins such as phenolic resin, urea resin, melamine resin, benzoguanamine resin, epoxy resin, and diallyl phthalate resin; silicone resin; and polymer or copolymer of (meth) acrylates and ethylenically unsaturated compounds such as styrene are preferred.

Further, from the standpoint of availability, thermosetting resins such as phenolic resin, urea resin, melamine resin, benzoguanamine resin, and epoxy resin; and polymer or copolymer of (meth) acrylates and ethylenically unsaturated compounds such as styrene are preferred.

The filler (a) in the present invention may be of any shape such as spherical, granular, and plate-like. For example, if spherical, even when the filler (a) is charged into the porous layer B in large amounts, space between the fillers assists in securing a pathway for lithium ions, and in addition, slip characteristics of the surface of the porous layer B are easily secured. If granular, an anchoring effect is exerted between the filler and the binder resin, and falling off of particles from the porous layer B can be prevented. If plate-like, dendrites that grow between electrodes can be effectively inhibited by orienting particles in the porous layer B. Such effects can be expected depending on the particle shape, and thus the shape of the filler can be selected depending on the desired performance. Mixtures of fillers having a different shape (e.g., spherical and granular, spherical and plate-like) can also be used.

The average diameter of the filler (a) in the present invention preferably in the range of 0.1 to 3.0 µm, more preferably in the range of 0.3 to 1.0 µm. If the lower limit of the average diameter is in this preferred range, when the polyolefin porous membrane A and the porous layer B are laminated, the filler (a) does not penetrate into the pores of the polyolefin porous membrane A, and the air resistance can be kept low. When the upper limit of the average diameter is in this preferred range, falling off of the filler from the porous layer B can be prevented in a battery assembly process while maintaining the planarity and thickness accuracy of the laminated porous membrane. The average diameter of the filler in the present invention is a value measured using SEM.

The particle size distribution of the filler (a) in the present invention is not critical, and the particle size distribution may be monodisperse or polydisperse. In the case of fillers having a narrow particle size distribution with similar primary particle sizes, the air resistance may tend to be low; on the other hand, in the case of a broad particle size distribution, although the air resistance may tend to be high, the filling rate of the filler in the porous layer B is easy to increase, and the heat shrinkage-reducing effect may tend to be high.

The filler (a) in the present invention can be used if it is nonporous, porous, or hollow. A porous filler tends to provide a binding property between the binder resin (b) and the filler (a), and a hollow filler is preferred from the standpoint of reduction of the weight of a separator. Examples of such hollow particles include those comprising polymer or copolymer of (meth) acrylates and ethylenically unsaturated compounds such as styrene.

The binder resin (b) in the porous layer B in the present invention may be any resin, but it is preferably a heat resistant resin because it can impart a meltdown-resistant property to the laminated porous membrane.

Specific examples of the heat resistant resin in the present invention include polyamide; polyacetal; polyesters such as polyethylene terephthalate and polybutylene terephthalate; polyether sulfone; polyphenylene sulfide; polyamide-imide; polyetherimide; polyether ether ketone; polyimide; liquid crystal polymers such as polycondensate of ethylene terephthalate and *p*-hydroxybenzoic acid and polycondensate of 2,6-hydroxynaphthoic acid and *p*-hydroxybenzoic acid; and fluororesins such as polytetrafluoroethylene, polyvinylidene fluoride, tetrafluoroethylene/perfluoroalkyl vinyl ether copolymer, tetrafluoroethylene/hexafluoropropylene copolymer, and tetrafluoroethylene/ethylene copolymer.

Among these heat resistant resins, polyamide-imide resin is preferably used from the standpoint of good solubility in highly polar solvent, heat resistance, affinity for electrolyte solution, electrolyte resistance, and oxidation resistance.

The polyamide-imide resin in the present invention can be produced by a known method such as the isocyanate method in which the polyamide-imide resin is produced from an acid component and an isocyanate (amine) component, the acid chloride method in which the polyamide-imide resin is produced from acid chloride (acid component) and amine, or the direct method in which the polyamide-imide resin is produced from an acid component and an amine component, and the diisocyanate method is preferred from the standpoint of production cost.

Examples of the acid component for use in the synthesis of the polyamide-imide resin in the present invention include trimellitic acid anhydride (chloride), a portion of which can be replaced with any other polybasic acid or anhydride thereof. Examples thereof include tetracarboxylic acids such as pyromellitic acid, biphenyltetracarboxylic acid, biphenylsulfonetetracarboxylic acid, benzophenonetetracarboxylic acid, biphenyl ether tetracarboxylic acid, ethylene glycol bistrimellitate, and propylene glycol bistrimellitate, and anhydrides thereof; aliphatic dicarboxylic acids such as oxalic acid, adipic acid, malonic acid, sebacic acid, azelaic acid, dodecane dicarboxylic acid, dicarboxypolybutadiene, dicarboxypoly(acrylonitrile-butadiene), and dicarboxypoly(styrene-butadiene); alicyclic dicarboxylic acids such as 1,4-cyclohexanedicarboxylic acid, 1,3-cyclohexanedicarboxylic acid, 4,4'-dicyclohexylmethanedicarboxylic acid, and dimer acid; and aromatic dicarboxylic acids such as terephthalic acid, isophthalic acid, diphenylsulfonedicarboxylic acid, diphenyl ether dicarboxylic acid, and naphthalenedicarboxylic acid. Among them, 1,3-cyclohexanedicarboxylic acid and 1,4-cyclohexanedicarboxylic acid are preferred in terms of electrolyte resistance. Also, a portion of a trimellitic acid compound can be replaced with a glycol to introduce a urethane group into a molecule, thereby providing the polyamide-imide resin with flexibility. Examples of glycols include alkylene glycols such as ethylene glycol, propylene glycol, tetramethylene glycol, neopentyl glycol, and hexanediol; polyalkylene glycols such as polyethylene glycol, polypropylene glycol, and polytetramethylene glycol; and polyesters with terminal hydroxyl groups synthesized from one or more of the dicarboxylic acids described above and one or more of the glycols described above, among which polyethylene glycol and polyesters with terminal hydroxyl groups are preferred. The number average molecular weight of them is preferably 500 or more, more preferably 1,000 or more. The upper limit is not limited, but is preferably less than 8,000.

When a portion of the acid component is replaced with at least one from the group consisting of dimer acid, polyalkylene ether, polyester, and butadiene rubber containing any one of a carboxyl group, a hydroxyl group, and an amino group at its terminal, it is preferable to replace 1 to 60 mol% of the acid component.

The diamine (diisocyanate) component used in the synthesis of a polyamide-imide resin is preferably composed of *o*-tolidine and tolylenediamine, and examples of the component that substitutes for a portion thereof include aliphatic diamines such as ethylenediamine, propylenediamine, and hexamethylenediamine, and diisocyanates thereof; alicyclic diamines such as 1,4-cyclohexanediamine, 1,3-cyclohexanediamine, and dicyclohexylmethanediamine, and diisocyanates thereof; and aromatic diamines such as *m*-phenylenediamine, *p*-phenylenediamine, 4,4'-diaminodiphenylmethane, 4,4'-diaminodiphenyl ether, 4,4'-diaminodiphenylsulfone, benzidine, xylylenediamine, and naphthalenediamine, and diisocyanates thereof, among which dicyclohexylmethanediamine and a diisocyanate thereof are more preferred in terms of reactivity, cost, and electrolyte resistance, and 4,4'-diaminodiphenylmethane, naphthalenediamine, and diisocyanates thereof are still more preferred. In particular, *o*-tolidine diisocyanate (TODI), 2,4-tolylene diisocyanate (TDI), and a blend thereof are most preferred. In order particularly to improve adhesion of the porous layer B, *o*-tolidine diisocyanate (TODI) which has high stiffness accounts for 50 mol% or more, preferably 60 mol% or more, and more preferably 70 mol% or more of total isocyanates.

The polyamide-imide resin in the present invention can be readily prepared by stirring in a polar solvent such as *N,N'*-dimethylformamide, *N,N'-*dimethylacetamide, *N*-methyl-2-pyrrolidone, or γ-butyrolactone with heating at 60 to 200°C. In this case, an amine such as triethylamine or diethylenetriamine; an alkali metal salt such as sodium fluoride, potassium fluoride, cesium fluoride, or sodium methoxide; or the like can also be used as a catalyst as required.

The polyamide-imide resin in the present invention preferably has a logarithmic viscosity of 0.5 dL/g or more. When the logarithmic viscosity is in this preferred range, a sufficient meltdown-resistant property is provided since the melt temperature does not excessively decrease, and further, since the molecular weight does not excessively decrease, the porous layer B is less likely to become brittle, and the anchoring effect can be maintained, providing excellent adhesion to the polyolefin porous membrane A. On the other hand, it is preferably less than 2.0 dL/g in view of processability and solubility in solvent.

The porous layer B in the present invention is obtained by applying to a given substrate film a solution (which hereinafter may be referred to as varnish) obtained by dissolution in a solvent that is able to dissolve a polyamide-imide resin and miscible with water, causing phase separation between the polyamide-imide resin and the solvent miscible with water under humidified conditions, and further coagulating the heat resistant resin by injection into a water bath (the water bath hereinafter may be referred to as a coagulation bath). A phase separation aid may optionally be added to the varnish.

Examples of solvents that can be used to dissolve the polyamide-imide resin in the present invention include *N,N*-dimethylacetamide (DMAc), *N*-methyl-2-pyrrolidone (NMP), hexamethylphosphoric triamide (HMPA), *N*,*N-*dimethylformamide (DMF), dimethyl sulfoxide (DMSO), γ-butyrolactone, chloroform, tetrachloroethane, dichloroethane, 3-chloronaphthalene, parachlorophenol, tetralin, acetone, and acetonitrile, and the solvent can be arbitrarily selected depending on the solubility of polyamide-amide-imide resin. Among them, *N,N*-dimethylacetamide (DMAc), *N*-methyl-2-pyrrolidone (NMP), and γ-butyrolactone are preferably used because they are excellent in solubility of polyamide-amide-imide resin and miscibility with water.

The phase separation aid for use in the present invention is at least one selected from water, alkylene glycols such as ethylene glycol, propylene glycol, tetramethylene glycol, neopentyl glycol, and hexanediol, polyalkylene glycols such as polyethylene glycol, polypropylene glycol, and polytetramethylene glycol, water-soluble polyesters, water-soluble polyurethanes, polyvinyl alcohols, carboxymethylcellulose, and the like. The phase separation aid is preferably added in an amount in the range of 1 to 50 wt%, more preferably 2 to 40 wt%, and still more preferably 3 to 30%, based on the solution weight of the varnish.

By adding such a phase separation aid(s) to the varnish, mainly, air resistance, surface porosity, and the rate of formation of a layer structure can be controlled. When the amount of the phase separation aid(s) is in the above preferred range, the rate of phase separation significantly increases, and moreover, the coating solution does not become cloudy at the mixing stage, not leading to precipitation of the resin component.

As the binder resin in the porous layer B in the present invention, a hydrophilic resin can also be preferably used from the standpoint of productivity of the laminated porous membrane. The hydrophilic resin in the present invention is a resin having water-solubility, water-swellability, or water-dispersibility. Specific examples thereof include copolyamide, polyamide resins having a polymer main chain into which a hydrophilic group such as a polyoxyalkylene segment or an alicyclic diamine segment is introduced and modifications of these resins, partially saponified polyvinyl acetate, polyvinyl alcohol, modifications of cellulose, and water-dispersible latex, and any other known water-soluble, water-swellable, or water-dispersible resin can also be used.

In particular, to improve the membrane strength of the porous layer B and improve the dispersibility of the filler (a), it is preferable to add a modification of cellulose such as carboxymethyl cellulose.

The water-soluble, water-swellable, or water-dispersible resin as used herein is a resin that is dissolved, swollen, or dispersed in water or an aqueous solution including water, and specifically, it means a resin that is dissolved, swollen, or dispersed in water, an aqueous solution containing a surfactant (examples of surfactants include anionic surfactants such as sodium alkylbenzene sulfonate, nonionic surfactants, cationic surfactants, and amphoteric surfactants), an aqueous solution containing an alkaline compound such as sodium hydroxide, an aqueous solution containing alcohol such as methyl alcohol or ethyl alcohol, or the like at 20 to 40°C.

When a hydrophilic resin is used as the binder resin in the porous layer B, it is preferred that the varnish contain a leveling agent from the standpoint of coatability on the polyolefin porous membrane A. In addition, various additives (e.g., surfactants, dispersants) can be added for dispersibility of the filler (a) and prevention of aggregation in the varnish. Such additives are preferably nonionic compounds in order to avoid an adverse effect on battery performance.

The thickness of the porous layer B is preferably 0.5 to 5.0 µm, more preferably 1.0 to 4.0 µm, and still more preferably 1.0 to 3.0 µm. When the lower limit of the thickness is in this preferred range, the membrane strength and insulation property can be ensured when the polyolefin porous membrane A melts and shrinks at or higher than its melting point. When the upper limit of the thickness is in this preferred range, curling of the laminated porous membrane is prevented, and decrease in productivity in a battery assembly process is prevented. Further, the increase in the size when taken up is prevented, which is suitable for the increase in battery capacity which is expected to progress in the future.

The porosity of the porous layer B is preferably 30 to 90%, more preferably 40 to 70%. When the porosity of the porous layer B is in this preferred range, the electrical resistance of the porous layer B is low, which makes it easy to apply a high current, and in addition, the membrane strength is sufficiently strong. The air resistance of the porous layer B, as measured by a method in accordance with JIS P 8117, is preferably 5 to 500 sec/100 cc Air, more preferably 10 to 300 sec/100 cc Air, and still more preferably 10 to 200 sec/100 cc Air. When the air resistance is in this preferred range, the membrane strength is maintained, and deterioration of cycle characteristics is prevented.

In the method of producing the laminated porous membrane of the present invention from the polyolefin porous membrane A and the porous layer B, first, the filler (a) is dispersively mixed in a solution obtained by dissolving the binder resin (b) in an appropriate solvent, and additives such as surfactants, dispersants, and phase separation aids are added as required to prepare a varnish.

When a heat resistant resin such as polyamide-imide is used as the binder resin (b), a solvent miscible with water is extracted in a state where a varnish in which polyamide-imide resin is dissolved is in contact with the polyolefin porous membrane A, and the polyamide-imide resin is coagulated and made porous to obtain the porous layer B. The varnish in which polyamide-imide resin is dissolved and the polyolefin porous membrane A can be brought into contact by any method such as applying the varnish directly onto the polyolefin porous membrane A, and applying the varnish once onto a metal roll/belt or a film and transferring the varnish to the polyolefin porous membrane A.

When a hydrophilic resin such as water-dispersible latex is used as the binder resin (b), a method comprising applying the varnish directly onto the polyolefin porous membrane A and drying the solvent is preferred in terms of cost.

Properties of the laminated porous membrane of the present invention will now be described in detail.

The laminated porous membrane of the present invention needs to have a shutdown property and preferably has a shutdown temperature in the range of 70 to 160°C from the standpoint of safety. In general, when a heat resistant resin layer is laminated on a polyolefin porous membrane, the shutdown temperature of the laminated porous membrane is higher than the shutdown temperature of the polyolefin porous membrane. The shutdown temperature of the laminated porous membrane of the present invention can be adjusted by selection of the polyolefin porous membrane A; the shutdown temperature of the laminated porous membrane (Ts') can be prevented from being higher than the shutdown temperature of the polyolefin porous membrane A (Ts), i.e., the amount of shutdown temperature increase can be reduced to a low level, by selection of, for example, the method of laminating the porous layer B containing the filler (a) and the binder resin (b) as essential components on the polyolefin porous membrane A, the composition of the varnish comprising the filler (a), the binder resin (b), and other additives, and the thickness of the porous layer B. From the standpoint of safety, the amount of shutdown temperature increase (Ts' - Ts) is preferably small. Preferably, (Ts' - Ts) is 3°C or less, and more preferably, (Ts' - Ts) is ≈0°C.

The meltdown temperature of the laminated porous membrane of the present invention (Tm') is preferably higher than the meltdown temperature of the polyolefin porous membrane A (Tm). From the standpoint of safety, the meltdown temperature of the laminated porous membrane is 200°C or higher, more preferably 300°C or higher. Improvement in meltdown temperature can be effectively achieved by selection of, for example, the method of laminating the porous layer B comprising the filler (a), a heat resistant resin, and the like on the polyolefin porous membrane A, the composition of the varnish in which the heat resistant resin is dissolved, and the thickness of the porous layer B.

The upper limit of the total thickness of the laminated porous membrane obtained by laminating the porous layer B is 30 µm, more preferably 25 µm. The lower limit is preferably 5.0 µm, more preferably 7.0 µm. When the lower limit of the thickness is in this preferred range, a sufficient mechanical strength and insulation property can be ensured. When the upper limit is in this preferred range, the area of electrodes that can be housed in a battery container is not reduced, and decrease in battery capacity can be avoided.

Further, air resistance of the laminated porous membrane, which is one of the most important properties, is preferably 50 to 600 sec/100 cc Air, more preferably 100 to 500 sec/100 cc Air, and still more preferably 100 to 400 sec/100 cc Air. When the lower limit of the air resistance is in this preferred range, a sufficient insulation property is provided, and a short circuit and a membrane rupture can be prevented. When the upper limit is in this preferred range, the resistance of ion permeation is prevented from increasing, and charge and discharge properties and lifetime properties in a practical range are provided.

Further, for the laminated porous membrane of the present invention, when the air resistance of the polyolefin porous membrane A is taken as X (sec/100 cc Air), and the air resistance of the entire laminated porous membrane as Y (sec/100 cc Air), the ratio of them (Y/X) preferably satisfies the relationship Y/X ≤ 1.5. When it is in this preferred range, sufficient ion permeability can be ensured, and a separator suitable for a high-performance battery is provided.

The pin puncture strength of the laminated porous membrane of the present invention can be adjusted by design/selection of the polyolefin porous membrane A, and the pin puncture strength of the laminated porous membrane (P') may be slightly lower than the pin puncture strength of the polyolefin porous membrane A (P) depending on the method of laminating the porous layer B containing a polyamide-imide resin as an essential component. From the standpoint of processability, the rate of decrease in pin puncture strength (1 - P'/P) is preferably small. Preferably, (1 - P'/P) is 0.2 or less, and more preferably, (1 - P'/P) is 0.1 or less.

In the present invention, the peeling strength F (A/B) at the interface between the polyolefin porous membrane A and the porous layer B is preferably 1.0 N/25 mm or more, more preferably 1.5 N/25 mm or more, and still more preferably 2.0 N/25 mm or more. When the peeling strength is in this preferred range, a sufficient low heat-shrinking property and meltdown-resistant property in a high-temperature range can be achieved, and the porous layer B is prevented from peeling off in a battery assembly process. F (A/B) means an adhesion of the porous membrane B to the porous membrane A.

### EXAMPLES

The present invention will be described in more detail with reference to the following examples, but the present invention is not limited to these examples.

### Polyolefin porous membrane A

Here, a polyethylene porous membrane (thickness: 16 µm, air resistance: 110 sec/100 cc Air, porosity: 48%) was used as the polyolefin porous membrane A to produce a laminated porous membrane. Physical properties of the polyethylene porous membrane will be described below.

### (Synthesis Example 1)

### Synthesis of heat resistant resin (polyamide-imide)

Into a four-necked flask equipped with a thermometer, a cooling tube, and a nitrogen gas introduction tube, 1 mol of trimellitic acid anhydride (TMA), 0.8 mol of o-tolidine diisocyanate (TODI), 0.2 mol of 2,4-tolylene diisocyanate (TDI), and 0.01 mol of potassium fluoride were loaded together with *N*-methyl-2-pyrrolidone to a solids concentration of 20% and stirred at 100°C for 5 hours, and then the resulting mixture was diluted with *N*-methyl-2-pyrrolidone to a solids concentration of 14% to synthesize a polyamide-imide resin solution (a). The polyamide-imide resin obtained had a logarithmic viscosity of 1.35 dL/g and a glass transition temperature of 320°C.

### Preparation of varnish for forming porous layer B

According to the mixing ratio as shown in Table 2, a binder resin (b), a filler (a), and a solvent were placed into a polypropylene container together with zirconium oxide beads ("Torayceram" (registered trademark) beads available from TORAY INDUSTRIES, INC., diameter: 0.5 mm) and dispersed for 6 hours using a paint shaker (manufactured by Toyo Seiki Seisaku-Sho, Ltd.). The dispersion was then filtered through a filter with a filtration limit of 5 µm to prepare a varnish.

### (Examples 1 to 3 and Comparative Example 2)

### Lamination of porous layer B comprising heat resistant resin as binder (b)

The varnish obtained above was applied to a polyolefin porous membrane A by blade coating. The coated membrane was passed through a low humidity zone at a temperature of 25°C and an absolute humidity of 1.8 g/m³ for 8 seconds, and then through a high humidity zone at a temperature of 25°C and an absolute humidity of 12 g/m³ for 5 seconds, immersed in an aqueous solution containing 5% by weight of N-methyl-2-pyrrolidone for 10 seconds, washed with pure water, and then dried by being passed through a hot-air drying furnace at 70°C to obtain a laminated porous membrane. Here, blade clearance was adjusted so that the porous layer B had a predetermined thickness after being dried.

### (Examples 4 to 6 and Comparative Example 3)

### Lamination of porous layer B comprising hydrophilic resin as binder (b)

The varnish obtained above was applied to a polyolefin porous membrane A by blade coating, and the coated membrane was dried by being passed through a hot-air drying furnace at 70°C to obtain a laminated porous membrane. Here, blade clearance was adjusted so that the porous layer B had a predetermined thickness after being dried.

### (Examples 1 to 6 and Comparative Examples 2 to 4)

Using raw materials for a porous layer B shown in Table 1, a varnish was prepared according to the mixing ratio of varnish for forming a porous layer B shown in Table 2. The varnish prepared was laminated to a polyethylene porous membrane to obtain a laminated porous membrane.

### [Results]

Physical properties of the porous membranes obtained in Examples 1 to 6 and Comparative Examples 2 to 4 were measured by the following methods. Comparative Example 1 is evaluation results (properties) of a polyethylene porous membrane itself used as a polyolefin porous membrane A in Examples 1 to 6 and Comparative Examples 2 to 4. The results are shown in Table 3.

Thickness: Thickness was measured using a contact thickness meter (available from Mitsutoyo Corporation). A porous membrane of 50 mm square was provided and measured at the center and four corners, five points in total, and the arithmetic mean was defined as the thickness.

Air resistance: A Gurley value was measured in accordance with JIS P 8117.

Basis weight: The weight of a porous membrane cut to 50 × 50 mm was measured and converted to a weight per 1 m².

TD heat shrinkage rate: When a heat shrinkage rate in TD is measured, a porous membrane cut to 50 × 50 mm in MD and TD is fixed at both ends in MD to a frame having an aperture of 50 × 35 mm, for example, by tape such that the porous membrane is in parallel to TD. Thus, for MD, the membrane is fixed with a gap of 35 mm, and for TD, it is located with the edges of the membrane aligning with the frame aperture. The frame to which the porous membrane is fixed is heated in an oven at 150°C for 30 minutes and then cooled. Heat shrinkage in TD causes the edges of the porous membrane parallel to MD to bow slightly inward (toward the center of the frame's aperture). The shrinkage rate (%) in TD is calculated by dividing the shortest length in TD after heating by the TD length before heating (50 mm).

Meltdown temperature: A porous membrane of 50 mm square is sandwiched using metal block frames having a hole of 12 mm in diameter, and a tungsten carbide ball of 10 mm in diameter is placed on the porous membrane. The porous membrane is placed such that its plane is horizontal. Starting from 30°C, the temperature is increased at 5°C/min. The temperature at which the porous membrane is ruptured by the ball is measured and defined as the meltdown temperature.

Coefficient of static friction: A maximum coefficient of static friction between aluminum foil (mirror plane) and a porous layer B was measured under the conditions of a load of 30 g and a speed of 50 mm/min in accordance with ASTM D 1894-63.

Raw materials for a porous layer B are shown in Table 1.

**[Table 1]**

| | | |
|---|---|---|
| Filler (a) | a₁ | "EPOSTAR"™ S6 manufactured by Nippon Shokubai Co., Ltd., melamine-formaldehide condensed compound, true specific gravity 1.5 g/cm³, average diameter 0.5µm |
| | a₂ | Highly crosslinked particles SX8743 manufactured by JSR Corporation, core-shell structure of styrene/divinyl benzen, true specific gravity 1.1 g/cm³, average diameter 0.3µm |
| | a₃ | Highly crosslinked hollow particles SX866A manufactured by JSR Corporation, crosslinked styrene-acrylic resin, true specific gravity 1.2g/cm³, average diameter 0.3µm |
| | a₄ | Easily sinterable alumina AL-160GS-4 manufactured by Showa Denko K.K., true specific gravity 3.9 g/cm³, average diameter 0.6µm |
| Binder (b) | b₁ | Polyamide-imide resin prepared in Synthesis Example 1 (heat resistant resin), solid content concentration 14 wt% |
| | b₂ | "Nipol"™ LX407S manufactured by Zeon Corporation, denatured styrenee-butadien latex (hydrophilic resin), solid content oncentration 48 wt% |

Mixing ratios of varnish for forming a porous layer B are shown in Table 2.

**[Table 2]**

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Filler (a) | a₁ | 8.0 | - | - | 12.0 | - | - | - | - | - | - |
| | a₂ | - | 6.0 | - | - | 9.0 | - | - | - | - | - |
| | a₃ | - | - | 4.0 | - | - | 8.0 | - | - | - | - |
| | a₄ | - | - | - | - | - | - | - | - | 20.0 | 14.0 |
| Binder (b) | b₁ | 20.0 | 22.0 | 22.0 | - | - | - | - | 30.0 | 16.0 | - |
| | b₂ | - | - | - | 2.0 | 3.0 | 3.0 | - | - | - | 4.0 |
| Solvent | NMP | 72.0 | 72.0 | 74.0 | - | - | - | - | 70.0 | 64.0 | - |
| | Water | - | - | - | 86.0 | 88.0 | 89.0 | - | - | - | 82.0 |

| | | | | | | | | | | | |
|---|---|---|---|---|---|---|---|---|---|---|---|
| • unit of compounding ratio is wt% • blank value (-) means additive-free | | | | | | | | | | | |

It can be seen from Table 3 that a laminated porous membrane comprising a polyolefin porous membrane A, and a porous layer B provided on at least one surface of the polyolefin porous membrane A, the porous layer B containing a filler (a) and a binder resin (b) as essential components, the filler (a) having a true specific gravity of less than 2.0 g/cm³, has excellent properties.

**[Table 3]**

| Evaluated properties | units | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Film thickness | µm | 19 | 19 | 19 | 20 | 19 | 21 | 16 | 19 | 19 | 19 |
| Air resistance | sec/100cc | 135 | 140 | 140 | 125 | 125 | 125 | 110 | 145 | 130 | 130 |
| Weight | g/m² | 10.0 | 9.7 | 9.6 | 10.0 | 9.3 | 9.6 | 8.5 | 9.9 | 12.2 | 11.0 |
| Meltdown temperature | °C | 220 | 220 | 220 | 150 | 150 | 150 | 150 | >300 | 220 | 150 |
| TD heat shrinkage rate (150°C, 30 min) | % | 23 | 23 | 25 | 10 | 12 | 10 | ruptured | 20 | 18 | 14 |
| Maximum coefficient of static friction | - | 0.40 | 0.38 | 0.37 | 0.37 | 0.35 | 0.35 | 0.33 | 0.58 | 0.49 | 0.46 |

### INDUSTRIAL APPLICABILITY

The laminated porous membrane of the present invention can be used for various applications such as battery separators used in lithium ion batteries, nickel-hydrogen batteries, and the like, and separation membranes for electrolytic capacitors. The laminated porous membrane of the present invention can be advantageously used particularly as a lithium ion battery separator.

## Claims

1. A laminated porous membrane comprising a polyolefin porous membrane A, and a porous layer B provided on at least one surface of the polyolefin porous membrane A, the porous layer B containing a filler (a) and a binder resin (b) as essential components, the filler (a) having a true specific gravity of less than 2.0 g/cm³.

2. The laminated porous membrane according to claim 1, wherein the filler (a) in the porous layer B has an average diameter in the range of 0.1 to 3.0 µm.

3. The laminated porous membrane according to claim 1 or 2, wherein the filler (a) in the porous layer B is composed of organic substance.

4. The laminated porous membrane according to any one of claims 1 to 3, wherein the filler (a) in the porous layer B comprises particles having a pore therein.

5. The laminated porous membrane according to any one of claims 1 to 4, wherein the binder resin (b) in the porous layer B is a heat resistant resin.

6. The laminated porous membrane according to claim 5, wherein the binder resin (b) in the porous layer B contains a polyamide-imide resin.

7. The laminated porous membrane according to any one of claims 1 to 4, wherein the binder resin (b) in the porous layer B is a hydrophilic resin.

8. The laminated porous membrane according to any one of claims 1 to 7, wherein the polyolefin porous membrane A has a thickness in the range of 3 to 25 µm.

9. The laminated porous membrane according to any one of claims 1 to 8, wherein the polyolefin porous membrane A is produced by wet pcocess.

10. The laminated porous membrane according to any one of claims 1 to 9, having a shutdown temperature in the range of 70 to 160°C.

11. A battery separator comprising the laminated porous membrane according to any one of claims 1 to 9.

12. A battery comprising a positive electrode, a negative electrode, an electrolyte, and the at least one battery separator according to claim 11.
